# EUROPEAN PATENT APPLICATION

(11) **EP 2 908 194 A1**
(43) Date of publication of application: **19.08.2015**
(21) Application number: 14154769.5
(22) Date of filing: 12.02.2014
(51) Int. Cl.: G05B 19/042

(54) **Method and device for configuring hardware devices in an industrial automation system**

(71) Applicant: Siemens Aktiengesellschaft, 80333 München (DE)
(72) Inventor: Ramanathan, Rathinakumar, 560068 Bangalore (IN); Tiruveedula, Bhaskar Babu, 560029 Bangalore (IN)

(57) **Abstract**

The present invention relates to a method and device for configuring hardware devices in an industrial automation system. According to the present invention, when a user selects object(s) (402) in an industrial engineering application, the processor (102) determines selection of the object (402) and identifies best matching configurations (404A and 404B) from the configurations database (126) based on the selected object (402). Then, the processor (102) displays a visual representation of the best matching configurations (404A and 404B) in an ordered list. If the user feels that the ordered list consists of the desired configuration of the project, the processor (102) enables the user to select one best matching configuration (404A) and modify the selected best matching configuration (404A). If no best matching configuration is present, then the processor (102) creates a new configuration based on the selection of the objects and stores the configuration in a configuration database (126).

## Description

The present invention generally relates to the field of Industrial Engineering, and more particularly relates to configuring hardware devices in an industrial automation system.

In Industrial Automation system, each hardware device is responsible for a portion of overall operation of a Programmable Logic Controller (PLC). For example, said each hardware device may be a processor (also known as controller), or input and output (I/O) device.

Each of the hardware devices needs to be configured to interact and access the hardware devices. Configuration of hardware devices is created using an engineering graphical user interface (GUI) editor prior to downloading the configuration on the PLC. Initially, configuration of project is created followed by creation of a rack. The hardware devices are added in the rack by selecting corresponding objects displayed in an Industrial Engineering GUI application. For example, the user plugs in the required hardware devices and connects each hardware device with appropriate hardware devices in the rack using an engineering GUI editor to form a configuration of hardware devices. Then, the configuration is compiled in a desired format so that the compiled configuration can be downloaded on the PLC.

In the existing system, the above process needs to be repeated each time configuration of hardware devices is required to be created even when the similar configuration of hardware devices was created earlier using the engineering GUI editor, thereby wasting time and efforts.

In light of the foregoing, there is need for a system which allows intelligently capturing and storing of configurations of hardware devices, and reusing the configurations in future.

It is therefore an object of the present invention to provide a method and device for efficiently configuring hardware devices in an industrial automation system.

The object of the present invention is achieved by providing a method of efficiently configuring hardware devices in an industrial automation system. The method comprises determining, by a processor, selection of at least one object associated with a project from an object database. When a user wishes to a create a configuration of hardware devices, the user creates a project and a rack, and selects one or more objects corresponding to the hardware devices from a list of objects in an engineering graphical user interface (GUI) editor. The hardware devices comprise a processor (e.g., master processor or slave processor), and input/output (I/O) devices. Accordingly, the method further comprises dynamically determining at least one best matching configuration from a plurality of configurations stored in a configuration database based on the one or more objects selected by the user. Thus, it is determined whether there are any configurations in the configurations database best matching the selected objects. Therein, in determining the best matching configurations, the method comprises matching category associated with the project with category associated with each of the plurality of configurations, and identifying the best matching configurations from the plurality of configurations whose category matches the category associated with the project. The category associated with the project may depend on the category associated with the selected objects. For example, the category associated with the selected objects may include type of processors, type of I/O devices, and the like corresponding to the selected objects. Thus, the process of identifying the best matching configuration is dynamic with respect to the selection of the objects for the project.

If the best matching configurations are found, then the method comprises providing visual representation of the best matching configurations on a display unit. In one embodiment, the visual representation of the best matching configurations may be displayed in an ordered list, where the order of the best matching configuration is based on a pre-defined criteria such as rank associated with the best matching configuration. In another embodiment, visual representation of most preferred best matching configuration is highlighted among the ordered list so as to facilitate the user to select the most preferred best matching configuration.

If the user feels anyone of the best matching configurations is same as desired configuration, the user may select said one of the best matching configurations. Accordingly, the method comprises detecting selection of said one of the best matching configurations. The method also comprises modifying the selected best matching configuration and compiling each of the objects in the modified best matching configuration in a desired format. Advantageously, the modification of the best matching configuration would yield the desired configuration. For example, one or more objects may be added to the best matching configuration or one or more objects may be removed from the best matching configuration to obtain the desired configuration. Thus, the need to create a new configuration from scratch to arrive at the desired configuration is eliminated as the previously created configurations can be modified to obtain the desired configuration, thereby saving time and efforts required to create the new configuration, according to the present invention.

If the selected best matching configuration is same as the desired configuration, then each of the objects in the selected best matching configuration is directly compiled in a desired format (e.g., xml format or dat format) without modifying the selected best matching configuration. Thus, the plurality of configurations captured and stored in the configuration database can be directly reused for similar projects in future, thereby saving time and effort to create new configurations for each project.

The method further comprises updating a rank associated with the selected best matching configuration. For example, each of the configurations in the configuration database is assigned a rank. The rank indicates preference of one configuration over other configuration in the plurality of configurations stored in the configuration database. Advantageously, the rank associated with the best matching configuration helps in determining order in which the best matching configurations is to be displayed on the display unit. For example, the best matching configuration with the highest rank among other best matching configurations is displayed at the top of an ordered list while the best matching configuration with the lowest rank is displayed at the bottom of the ordered list. Additionally, the rank is incremented if the associated best matching configuration is selected from the best matching configurations by the user.

In addition, the method comprises bookmarking one or more of the best matching configurations for quick access in future. Advantageously, the bookmarked best matching configurations are displayed at the top in a preferred configuration window. Thus, the user can directly select any of the bookmarked best matching configurations as desired configuration for compiling in a desired format.

On the other hand, if no best matching configuration is found in the configuration database based on the selected objects, a new configuration for the project is created and stored in the configuration database. The configuration is stored in the configuration database even though the newly created configuration can be partially compiled or fully compiled. It can be noted that, the newly created configuration is stored in the configuration database so that the user can reuse the same in future. Additionally, the method comprises generating a visual representation of the new configuration so that the visual representation of the new configuration can be displayed in the preferred configuration window when the new configuration is determined as the best matching configuration. Also, the method comprises assigning a rank to the new configuration. Thus, the rank assigned to the new configuration helps determining order of the configuration in the ordered list if the configuration is determined as the best matching configuration.

The object of the present invention can also be achieved by providing a device for configuring hardware devices in an industrial automation system. The device comprises a processor and a memory coupled to the processor. The memory comprises a configuration identification module, a display module, an editing module, a compiling module, a ranking module, a bookmarking module, and a configuration creation module.

The configuration module is capable of determining selection of at least one object associated with a project from an object database, where the object corresponds to hardware devices. For example, the hardware devices may include a processor, an input device, and an output device. The configuration module is capable of dynamically determining at least one best matching configuration among the plurality of configurations stored in the configuration database based on the selected object. The display module is capable of displaying visual representation of the at least one best matching configuration on a display unit.

The editing module is capable of modifying the at least one best matching configuration. The compiling module is capable of compiling each of the objects in the at least one best matching configuration in a desired format. The ranking module is capable of assigning a rank to the plurality of configurations in the configuration database. Additionally, the ranking module is capable of updating the rank associated with the at least one best matching configuration in a ranking database when the at least one best matching configuration is reused. The bookmarking module is capable of bookmarking the at least one best matching configuration. The configuration creation module is capable of creating and storing a new configuration associated with the project when no best matching configuration exists in the configuration database. The configuration creation module is capable of generating a visual representation of the new configuration so that the visual representation of the new configuration can be displayed in the preferred configuration window when the new configuration is determined as one of the best matching configurations.

The device may be personal computer, laptop, a server computer, a tablet, microprocessor based electronic device and the like comprising an engineer graphical user interface (GUI) editor. It can be noted that the device may also comprise a storage unit for storing the object database, the configuration database, and the ranking database. Alternatively, each of these databases may be stored remotely and accessed when required via network connections. Further, the above modules may be stored in the memory in the form of machine readable instructions. The machine readable instructions are executed by the processor to perform the intended functionality.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a block diagram of an exemplary computing device for configuring hardware devices according to the present invention;
- FIG 2: is a process flowchart illustrating a method of determining a best matching configuration based on one or more objects selected by a user according to the present invention;
- FIG 3A: is a process flowchart illustrating a method of modifying and applying the best matching configuration according to one embodiment of the present invention;
- FIG 3B: is a process flowchart illustrating a method of applying the best matching configuration without modification according to another embodiment of the present invention; and
- FIG 4: is a screenshot view displaying best matching configurations during configuring hardware devices according to the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

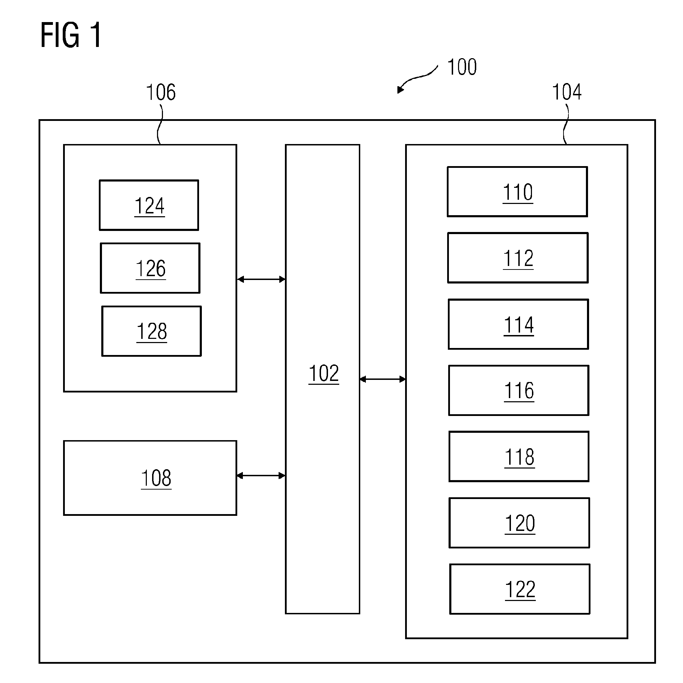

FIG 1 illustrates a block diagram of an exemplary computing device 100 capable of configuring hardware devices of an industrial automation system according to the present invention. The computing device 100 may be a personal computer, a laptop computer, a server computer, a tablet and the like. In FIG 1, the computing device 100 comprises a processor 102, a memory 104, a storage unit 106, and input/output devices 108.

The processor 102, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 102 may also include embedded controllers, such as generic or programmable logic devices or arrays, application specific integrated circuits, single-chip computers, and the like.

The memory 104 may be volatile memory and non-volatile memory. A variety of computer-readable storage media may be stored in and accessed from the memory 104. The memory 104 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. As depicted, the memory 104 includes a configuration creation module 110, a configuration identification module 112, a display module 114, an edit module 116, a compiling module 118, a ranking module 120, and a book marking module 122.

The modules 110 to 122 are stored in the form of machine-readable instructions on any of the above-mentioned storage media and may be executed by the processor 102. For example, when executed by the processor 102, the configuration creation module 110, cause the processor 102, create new configuration associated with a project and generate a visual representation of the new configuration. For example, a new configuration may include profinet (PN) master CPU connected either to Profinet or Profibus distributed IO device. The configuration creation module 110 causes the processor 102 to store the new configuration and the visual representation in a configuration database 126. For example, the new configuration is stored in the configuration database 126 even when the new configuration can be partially or fully compiled.

The configuration identification module 112 causes the processor 102 to determine selection of an object(s) associated with a project from an object database 124, where the object corresponds to a hardware device(s) of an industrial automation system. The configuration identification module 112 causes the processor 102 to dynamically determine one or more best matching configurations from a plurality of configurations pre-stored in the configuration database 126 based on the selected object(s). The display module 114 causes the processor 102 to provide a visual representation of the one or more best matching configurations on the input/output devices 108 (e.g., display unit).

The edit module 116 causes the processor 102 to detect selection of a best matching configuration from the one or more best matching configurations and modify the selected best matching configuration to obtain a desired configuration. The compiling module 118 causes the processor 102 to compile each of the objects in the modified best matching configuration in a desired format (e.g., .dat format). The ranking module 120 causes the processor 102 to assign a rank to the new configuration and update the rank assigned to the plurality of configurations in ranking information stored in the rank database 128 when the currently applied configuration matches any one of the pre-stored configurations. The bookmarking module 122 causes the processor 102 to bookmark one or more best matching configurations for future use.

The storage unit 106 may be a non-transitory storage medium configured for storing databases. For example, the storage unit 106 contains the object database 124 for storing objects corresponding to different hardware devices (e.g., processor, input device, and output device), the configuration database 126 for storing the plurality of configurations associated with different projects, and the ranking database 128 for storing ranking information associated with each of the plurality of configurations. It can be noted that object database 124, the configuration database 126, and the ranking database 128 may be located at a remote server and may be remotely accessed via a network connection.

The input/output devices 108 may include keyboard, keypad, monitor, touch sensitive display screen, mouse and the like. The input device/output devices 108 enable the user to interface with the computing device 100 for selecting objects for a project, viewing the best matching configurations, bookmarking the best matching configurations and so on. For example, the input device may enable selection of objects associated with a project while the output device may display the best matching configurations as an ordered list.

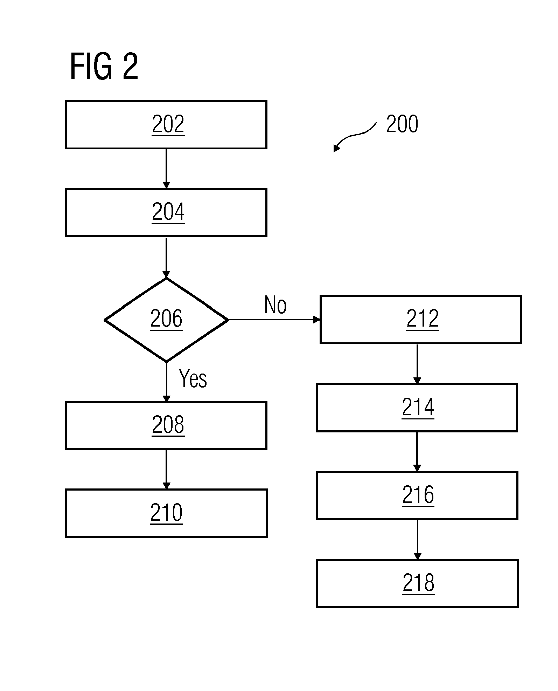

FIG 2 is a process flowchart 200 illustrating a method of determining a best matching configuration based on one or more objects selected by a user according to the present invention. Typically, the user needs to select a plurality of objects in an engineering Graphical User Interface (GUI) editor of an Industrial automation system to form a desired configuration for a project. Each of these objects corresponds to one of processor, input device, and output device. For example, the user may drag and drop an object corresponding to a central processing unit of specific type in the engineering GUI editor from a list of objects displayed in the engineering GUI editor.

According to the present invention, at step 202, selection of the object associated with the project in the engineering GUI editor is automatically detected by the processor 102. At step 204, category associated with the project is matched with category associated with each of a plurality of configurations in the configuration database 126 based on the selected object. For example, category associated with the project may include type of processor, a type of input/output (I/O modules and type of connections between them. At step 206, it is determined whether a match is found between the category associated with the project and the category associated with any of the plurality of configurations. If the match is found, then at step 208, one or more best matching configurations are identified from the configurations database 126.

At step 210, a visual representation of the one or more best matching configurations is displayed in a preferred configuration window of the engineering GUI editor. In one embodiment, the visual representation of the one or more best matching configurations is displayed in an ordered list in the engineering GUI editor. The order in which the visual representation of the one or more best matching configurations is determined based on rank assigned to each of the one or more best matching configurations. For example, the visual representation of the best matching configuration with highest rank among the one or more best matching configurations is displayed at the top of the ordered list while the visual representation of the best matching configuration with lowest rank among the one or more best matching configurations is displayed at the end of the ordered list. Additionally, the visual representation of the best matching configuration displayed at the top of the ordered list is highlighted as preferred configuration. The user may select anyone of the one or more best matching configurations and reuse the selected configuration if the ordered list consists of the desired configuration. If the user does not find the desired configuration in the ordered list, then the user may continue to select object(s) for the project from the plurality of objects available in the object database 124. While the user selects a new object for the project, steps 204 to 210 are performed. The ordered list of the best matching configurations also changes dynamically while the user adds or removes objects to/from the project. That is, based on the objects added or removed, the best matching configurations also changes and hence the ordered list of the best matching configuration is updated each time the user makes changes to the project.

If no match is found at step 206, then at step 212, a new configuration associated with the project is created. At step 214, a visual representation of the new configuration is generated. Additionally, the visual representation of the new configuration is displayed in the preferred configuration window. At 216, a rank is assigned to the new configuration associated with the project. When a new configuration is created by the user, rank assigned to the new configuration is minimal. The rank is updated each time the user reuses the new configuration for different projects. The information associated with the rank assigned to each of the plurality of configurations is stored in the ranking database 128. At step 218, the new configuration associated with the project is stored in the configuration database 126. The new configuration associated with the project is stored in the configuration database 126 if the project associated with the new configuration can be partially compiled or fully compiled. In case of the fully compiled project, the objects which are part of the new configuration are successfully compiled while in case of partially compiled project, some of the objects which are part of the new configuration are successfully compiled while other objects are erroneously compiled. This ensures that the objects which can be successfully compiled are stored as part of the new configuration in the configuration database 126.

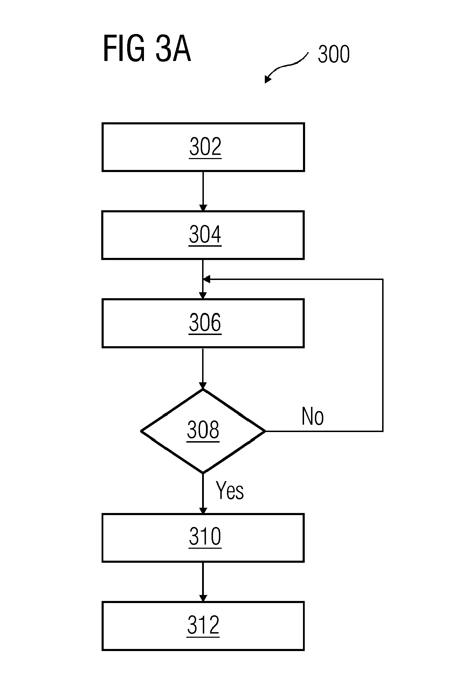

FIG 3A is a process flowchart 300 illustrating a method of modifying and applying the best matching configuration according to one embodiment of the present invention. If the user feels that the ordered list of the best matching configurations consists of the desired configuration of the project, then at step 302, selection of the desired configuration from the ordered list of the best matching configurations displayed in the preferred configuration window is detected. For example, the user may drag and drop the desired configuration from the ordered list in the engineering GUI editor window.

At step 304, the selected best matching configuration is modified. The user can modify the selected best matching configuration to obtain the desired configuration. For example, the user may remove one or more objects from the selected best matching configuration based on the requirement. Also, the user may add one or more objects from the selected best matching configuration. At step 306, each of the objects in the modified best matching configuration is compiled in a desired format. For example, each of the objects in the modified best matching configuration is compiled in a ".dat" format or ".xml" format. In one embodiment, the objects in the modified best matching configuration are compiled after a compile command is triggered by the user via the engineering GUI editor. Alternatively, the objects in the modified best matching configuration are compiled automatically after a time out event occurs. Also, the objects in the modified best matching configuration are compiled when the user saves the modified best matching configuration or closes the modified best matching configuration.

At step 308, it is determined whether the objects in the modified best matching configuration are successfully compiled. If the objects are successfully compiled, then at step 310, the compiled best matching configuration is applied for the project. For example, the compiled best matching configuration is downloaded on a programmable logic controller and run for the project. If the objects in the modified best matching configuration are not successfully compiled, then the process 300 is routed to step 304. At step 312, the modified best matching configuration is stored as a new configuration in the configuration database 126 and a rank is assigned to said configuration. It can be noted that the user can bookmark the modified best matching configuration for future use. In one exemplary implementation, bookmarked configuration(s) is displayed at top of the ordered list in the preferred window.

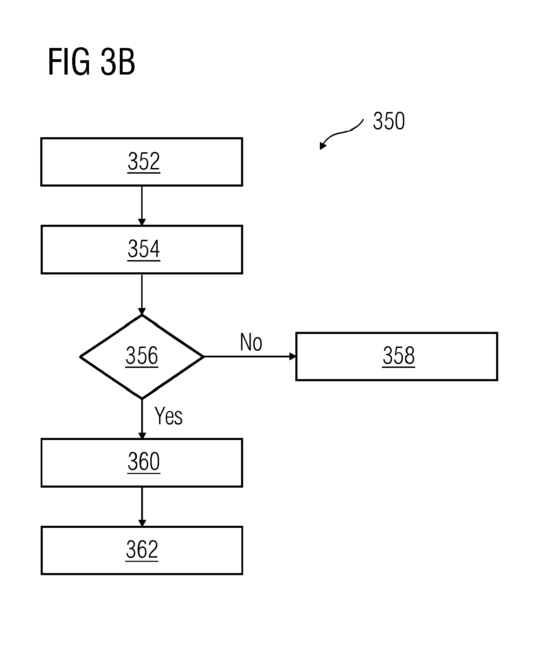

FIG 3B is a process flowchart 350 illustrating a method of applying the best matching configuration without modification according to another embodiment of the present invention. It can be seen that the process flowchart 350 is similar to the process flowchart 300, except that in the process flowchart 350, the selected best matching configuration is compiled without modifying the selected best matching configuration. That is, the best matching configuration is compiled directly after selection from the ordered list. This is applicable when the best matching configuration is the desired configuration.

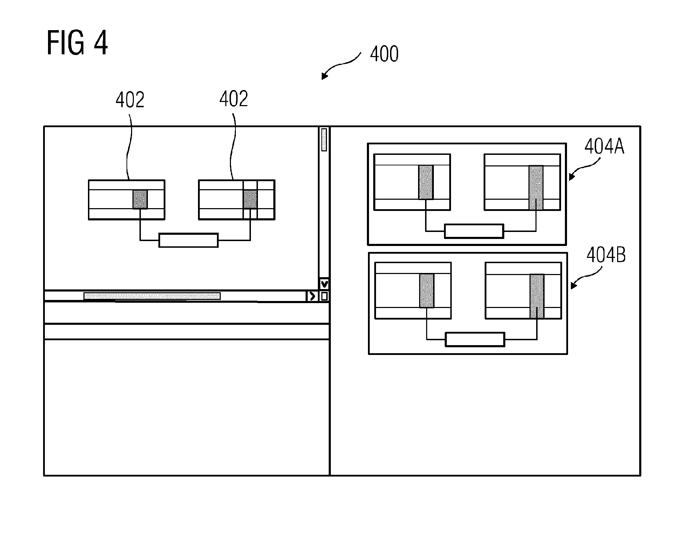

FIG 4 is a screenshot view 400 displaying best matching configurations 404A and 404B during configuring hardware devices according to the present invention. As depicted, the screenshot view 400 displays an engineering GUI editor containing objects 402 selected by a user for a project and best matching configurations 404A and 404B in a preferred configuration window. When the user selects the objects from a list of objects (not shown) displayed in the engineering GUI editor, visual representation of the best matching configurations 404A and 404B are displayed in the preferred configuration window based on the objects 402 selected by the user as an ordered list. In one embodiment, the best matching configuration 404A is ranked higher than the best matching configuration 404B and hence the best matching configuration 404A is at the top of the ordered list and the best matching configuration 404B is at the bottom of the ordered list. It is also possible that the best matching configuration 404A is bookmarked by the user and hence the visual representation of the best matching configuration 404A is displayed at the top of the ordered list. The user can drag and drop one of the best matching configurations 404A and 404B in the ordered list and compile the same after editing as desired. This facilitates the user to select and reuse the desired configuration from the ordered list without creating a new configuration for a project, thereby saving time and efforts to recreate the same configuration again.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### Listing of references

100 - Computing device 102 - Processor
104 - Processor
106 - Storage unit
108 - Input/output devices
110 - Configuration creation module
112 - Configuration identification module
114 - Display module
116 - Editing module
118 - Compiling module
120 - Ranking module
122 - Book marking module
124 - Object database
126 - Configuration database
128 - Raking Database
402 - Objects
404A and 404B - Best matching configuration

## Claims

1. A method of configuring hardware devices in an industrial automation system, the method comprising:
determining, by a processor (102), selection of at least one object (402) associated with a project from an object database (124), wherein the at least one object (402) corresponds to a hardware device;
dynamically determining at least one best matching configuration (404) among a plurality of configurations in a configuration database (126) based on selection of said at least one object (402); and
providing a visual representation of the at least one best matching configuration (404) on a display unit (108).

2. The method in accordance with claim 1, further comprising:
detecting selection of the at least one best matching configuration (404).

3. The method in accordance with claim 2, further comprising:
modifying the at least one best matching configuration (404).

4. The method in accordance with claim 2 or 3, further comprising:
compiling each of objects (402) in the at least one best matching configuration (404) in a desired format.

5. The method in accordance with claim 2, further comprising:
updating a rank associated with the at least one best matching configuration (404) in a ranking database (128) if the at least one best matching configuration (404) is selected.

6. The method in accordance with claim 1, further comprising:
bookmarking the at least one best matching configuration (404).

7. The method in accordance with claim 1, further comprising:
creating a new configuration associated with the project;
generating a visual representation of the new configuration;
assigning a rank to the new configuration associated with the project; and
storing the new configuration associated with the project in the configuration database (126), wherein the new configuration corresponds to partially compiled or fully compiled configuration.

8. The method in accordance with claim 1, wherein dynamically determining said at least one best matching configuration (404) among the plurality of configurations in the configuration database (126) comprises:
matching category associated with the project with category associated with each of the plurality of configurations;
identifying one or more best matching configurations (404) from the plurality of configurations whose category matches the category associated with the project.

9. The method in accordance with claim 8, wherein providing a visual representation of the at least one best matching configuration (404) comprises:
displaying the visual representation of the one or more best matching configurations (404) in an ordered list based on rank assigned to the one or more best matching configurations (404).

10. The method in accordance with claim 1, wherein the hardware device is a processor, an input device, and an output device.

11. A device comprising:
a processor (102); and
a memory (104) coupled to the processor (102), wherein the memory (104) comprises:
a configuration identification module (112) capable of:
determining selection of at least one object (402) associated with a project from an object database (124), wherein the at least one object (402) corresponds to a hardware device; and
dynamically determining at least one best matching configuration (404) among a plurality of configurations in a configuration database (126) based on selection of said at least one object (402); and
a display module (114) capable of displaying a visual representation of the at least one best matching configuration (404) on a display unit (108).

12. The device in accordance with claim 11, wherein the memory (104) comprises an editing module (116) capable of modifying the at least one best matching configuration (404).

13. The device in accordance with claim 11 or 12, wherein the memory (104) comprises a compiling module (118) capable of compiling each of objects (402) in the at least one best matching configuration (404) in a desired format.

14. The device in accordance with claim 13, wherein the memory (104) comprises a ranking module (120) capable of:
assigning a rank to the plurality of configurations in the configuration database (126); and
updating the rank associated with the at least one best matching configuration (404) in a ranking database (128) when the at least one best matching configuration (404) is used.

15. The device in accordance with claim 11, wherein the memory (104) comprises a bookmarking module (122) capable of bookmarking the at least one best matching configuration (404).

16. The device in accordance with claim 11, wherein the memory (104) comprises a configuration creation module (110) capable of:
creating a new configuration associated with the project; and
generating a visual representation of the new configuration.
